# EUROPEAN PATENT APPLICATION

(11) **EP 4 671 334 A1**
(43) Date of publication of application: **31.12.2025**
(21) Application number: 24306023.3
(22) Date of filing: 25.06.2024
(51) Int. Cl.: C09J 7/21

(54) **MULTILAYER BAND AND METHOD FOR PROTECTING A PAINTED PRODUCT**

(71) Applicant: Neenah, Inc., Alpharetta, GA 30009 (US)
(72) Inventor: DELAGARDE, Marie, 26000 VALENCE (FR); MESNIL, Benoit, 26000 VALENCE (FR)
(74) Representative: Plasseraud IP

(57) **Abstract**

The invention relates to a multilayer band (1) for protecting a painted product, the multilayer band (1) comprising: a protecting layer (2) made of a felt comprising polymer fibers, the protecting layer (2) having a thickness (E) of at least 1 mm and a basis weight of at least 100 g/m²; and an adhesive layer (4) comprising an adhesive and covering at least a portion of a surface (2.1) of the protecting layer (2).

The polymer is preferably recycled PET and the adhesive is preferably polyisobutylene.

The invention also relates to a method for applying such a multilayer band (1) on a vehicle body part, such as a door or a bumper.

## Description

### Technical Field

This disclosure pertains to the field of devices for protecting painted products. The present disclosure is aimed at but is not limited to the protection of a vehicle body from scratches or impacts.

### Background Art

Various kinds of protections may be provided to a painted product in order to prevent the paint from being unintentionally scratched or dented. For example, vehicle manufacturers apply a film and/or a foam on specific locations of a newly made vehicle for avoiding any damage to the vehicle during transport, from the factory to the end customer.

One known protecting device consists of a 10 mm-thick polyethylene foam attached to the vehicle body by means of an adhesive tape. It has been observed however that polyethylene foam may fall off the vehicle during transport. Without wishing to be bound by theory, it appears that the foam shrinks especially at concave or curved portions of the vehicle. The shrinkage breaks the cohesion between the foam and the adhesive layer, thereby leading to the foam falling off. Beyond the fact that the fallen foam does not protect the vehicle anymore, fallen pieces of polyethylene foam are damageable to the environment.

To solve this problem, the inventors tried to use rubber-based adhesive to protect the vehicle. Indeed, the rubber-based adhesive are known to be compatible with the paint of the vehicle. Unfortunately, the inventors noticed that the rubber-based adhesive can be damaged by UV radiations. Indeed, without wishing to be bound by theory, UV seems to degrade the rubber-based adhesive by breaking the molecular cohesion, thereby leading to a peeling issue: it becomes harder to remove the rubber-based adhesive as one piece (when the painted product does not need to be protected anymore), because the rubber-based adhesive breaks apart.

There is therefore still a need for a protecting device which adheres more reliably to a painted product, i.e. adheres as long as one wants the protecting device to adhere and is properly removable when one wants to remove the protecting device from the painted product.

### Summary

This disclosure improves the situation with a multilayer band for protecting a painted product, the multilayer band comprising:
a protecting layer made of a felt comprising polymer fibers, the protecting layer having a density higher than 50 kg/m³; and
an adhesive layer comprising an adhesive covering at least a portion of a surface of the protecting layer.

Advantageously, the multilayer band of the present disclosure adheres more reliably to the painted product than the10 mm-thick polyethylene foam attached to the vehicle body by means of an adhesive tape.

Moreover, the density higher than 50 kg/m³ of the felt enables to filter out the UV radiations, thereby preventing the adhesive layer from being damaged by UV radiations. Additionally, the polymer-fibers felt is not prone to shrinkage and therefore it does not fall off the adhesive layer unintentionally.

The multilayer band of the present disclosure is therefore also environmentally friendly as it uses only a controlled amount of material and it does not disperse waste when in use.

In the present disclosure, the term "protecting" is intended to refer to an ability to prevent damages to the painted product. The protection is mainly intended to be a physical/mechanical protection, i.e. to prevent the painted product from being scratched or dented by another object which would contact the painted product. Although it is not its primary purpose, the multilayer band of the present disclosure may inherently provide a protection of another nature, such as a protection against water, snow, hale, or dust.

In the present disclosure, a felt is to be understood as an aggregate of fibers forming together a nonwoven soft solid entity. Accordingly, a cotton cloth is not a felt within the meaning of the present disclosure.

In the present disclosure, "about" is intended to mean +/-10% of a given value.

In some examples, the density of the protecting layer is from 70kg/m³ to 400 kg/m³, preferably from 83 kg/m³ to 250 kg/m³, more preferably from 100 kg/m³ to 200 kg/m³. These values ensure that the adhesive layer is protected from UV light for at least one year, which may be advantageous in the context of the car industry.

In the present document, the density of the protecting layer can be determined by dividing the basis weight of the protecting layer by the thickness of the protecting layer.

In the present document, the basis weight is measured according to the standard ISO 9073-1:2023.

In the present document, the thickness is measured according to the standard ISO 9073-2:1989 using a pressure of 2 kPa.

The skilled person will know how to adapt the thickness and basis weight of the protecting layer so as to reach the target density.

In some examples, the protecting layer may have a thickness of at least 1 mm, a basis weight of at least 100 g/m², or a combination thereof. Advantageously, a 1 mm thick felt has shown to be sufficient to protect a painted product from inadvertent scratches.

In some examples, the basis weight of the protecting layer is at least 150 g/m², preferably at least 350 g/m². This value ensures that the adhesive layer is protected from UV light for at least one year, which may be advantageous in the context of the car industry.

In some examples, the thickness of the protecting layer is less than 5 mm. Beyond that thickness, it may not be convenient to wind the multilayer band on a coil: the coil would have a too big diameter for a given useful length, rendering the handling of the coil cumbersome to the operators.

In some examples, the thickness of the protecting layer is from 1.2 to 3.0 mm, preferably from 2.5 to 2.7 mm or from 1.5 to 2.1 mm or from 1.5 to 2.3 mm. The protection of the painted surface from scratches is achieved with a 1 mm thickness, and is improved when the thickness is more than 1.5 mm. Moreover, a value of about 2.6 mm seems optimal to protect the painted surface from impacts, e.g., when opening a vehicle door to not dent the door of an adjacently parked vehicle.

In some examples, for a basis weight of the protecting layer being equal to 100 g/m², the thickness of said protecting layer is from 0.25 to 2 mm, preferably from 0.4 to 1.5 mm, more preferably 0.5 to 1.2 mm. Advantageously such protecting layer protects efficiently the adhesive from UV light and the painted surface from scratches and shocks.

The inventors noticed that, for a basis weight of the protecting layer being equal to 100 g/m², a thickness of said protecting layer being from 0.5 to 0.7 mm is predominantly adapted to protect the painted surface from shocks and the adhesive layer from UV radiations.

The inventors also noticed that, for a basis weight of the protecting layer being equal to 100 g/m², a thickness of said protecting layer being from 0.8 to 1.2 mm is predominantly adapted to protect the painted surface from scratches and to protect the adhesive layer from UV radiations.

In some examples, the basis weight of the protecting layer is less than 500 g/m². A felt that would be denser could fall off due to its weight; or the felt could become too stiff and not conformable enough to be usable on curved/concave surfaces.

In some examples, the basis weight of the adhesive layer is from 30 to 120 g/m², preferably from 80 to 90 g/m², more preferably about 85 g/m². The adhesive layer may have a thickness of less than 1 mm, preferably less than 100µm, more preferably from 75 to 90µm. These ranges of value ensure that the multilayer band adheres efficiently to the painted surface to be protected for at least one year, which may be advantageous in the context of the car industry.

In some examples, the protecting layer has a width that is from 10 mm to 50 mm, preferably from 20 mm to 40 mm, more preferably about 30 mm. In some examples, the protecting layer has a length that is comprised from 20 cm to 300 cm, preferably from 30 cm to 70 cm, more preferably about 60 cm. These dimensions offer a good trade-off, i.e. a sufficient protection without spoiling material.

In some examples, the protecting layer has a basis weight from 150 to 450g/m2 and a thickness from 1 to 3mm, in particular a basis weight from 380 to 420g/m2 and a thickness from 2.5 to 2.7mm, or a basis weight from 170 to 230/m2 and a thickness from 1.3 to 1.7 mm.

In some examples, the polymer fibers comprise fibers of polyethylene terephthalate (PET), fibers of polypropylene (PP), polybutylene terephthalate (PBT), polylactic acid (PLA), viscose, or a combination thereof, preferably fibers of polyethylene terephthalate, fibers of polypropylene or a combination thereof, more preferably fibers of polyethylene terephthalate. The manufacturing or recycling process aimed at obtaining these fibers becomes greener every day. PET presents particularly good results for protecting the adhesive layer from UV light.

In some examples, the polymer fibers comprise at least 5%, preferably at least 10%, more preferably at least 50% of recycled polymer fibers such as recycled PET fibers. Beyond the protection of the environment incurred by the fact that the protecting band does not fall off the painted product, using recycled material further improves the greenhouse gas index of the multilayer band of the present disclosure.

Recycled PET fibers are well adapted be comprised in the felt of the protecting layer of the present disclosure. In particular, the recycled PET may contain impurities which render the felt darker: less material is thus needed to obtain a given UV protection.

The adhesive of the adhesive layer can be any kind of adhesive which does not damage fresh paint when applied and/or removed from said fresh paint. In some examples, the adhesive can be a rubber-based adhesive, silicone adhesive, acrylic adhesive, or a mixture thereof, in particular polyisobutylene. The polyisobutylene is particularly known for having good behavior when applied to or remove from fresh paint.

In some examples, the surface of the felt is entirely covered by the adhesive layer. Alternatively, at least a third or half of the width of the felt is not covered by the adhesive layer.

In one example, the protecting layer has a thickness of from 1.5 to 2.1 mm and a basis weight of from 180 to 200 g/m² and the adhesive layer comprises polyisobutylene and has a basis weight of from 80 g/m² to 90 g/m².
Advantageously, a multilayer band comprising such protecting layer and such adhesive layer efficiently adheres to a painted surface to be protected, protects efficiently the painted surface from scratches and is removable without damage from the painted surface when the painted surface does not need to be protected anymore.
Indeed, the protection layer protects efficiently the painted surface from scratches and the polyisobutylene of the adhesive layer from the UV radiation so that the multilayer band can be removable without damage from the painted surface. The adhesive layer enables the multilayer band to adhere to the painted surface.
A multilayer band comprising such protecting layer and such adhesive layer is suitable for the protection of a vehicle bumper.

In one example, the protecting layer has a thickness of from 2.5 to 2.9 mm and a basis weight of from 350 to 450 g/m² and the adhesive layer comprises polyisobutylene and has a basis weight of from 80 g/m² to 90 g/m².
Advantageously, a multilayer band comprising such protecting layer and such adhesive layer efficiently adheres to a painted surface to be protected, protects efficiently the painted surface from shocks and is removable without damage from the painted surface when the painted surface does not need to be protected anymore.
Indeed, the protection layer protects efficiently the painted surface from shocks and the polyisobutylene of the adhesive layer from the UV radiation so that the multilayer band can be removable without damage from the painted surface. The adhesive layer enables the multilayer band to adhere to the painted surface.
A multilayer band comprising such protecting layer and such adhesive layer is suitable for the protection of a vehicle door.

The invention also relates to a method for protecting a painted product, the method comprising: providing a multilayer band according to one of the examples given above; and applying the multilayer band on the painted product, such that the adhesive layer directly contacts the painted product.

In some examples, providing the multilayer band comprises providing the multilayer band as a coil, wherein the adhesive layer is covered by a protective film, the method further comprising unwinding the coil and removing the protective film before applying the multilayer band on the painted product. The protective film may be made of paper.

In some examples, the painted product is a vehicle door having an edge, wherein applying the multilayer band on the painted product comprises applying the multilayer band such that the adhesive layer contacts a portion of the vehicle door adjacent to the edge.

In the method present invention, the multilayer band comprises a protecting layer having a thickness of from 2.5 to 2.9 mm, a basis weight of from 350 to 450 g/m² or a combination thereof, and an adhesive layer comprising polyisobutylene, having a basis weight of from 80 g/m² to 90 g/m², or a combination thereof is advantageous to protect a vehicle door.

In some examples, a portion of the surface of the protecting layer that is void of adhesive layer is free of contact with the vehicle door.

In some examples, the portion of the vehicle door adjacent to the edge is concave.

In some examples, the painted product is a vehicle bumper.

In the method present invention, the multilayer band comprising a protecting layer having a thickness of from 1.5 to 2.1 mm and a basis weight of from 180 to 250 g/m², and an adhesive layer comprising polyisobutylene and having a basis weight of from 80 g/m² to 90 g/m² is advantageous to protect a vehicle bumper.

In some examples, applying the multilayer band on the painted product comprises applying the multilayer band at a corner of the bumper.

### Brief Description of Drawings

Other features, details and advantages will be shown in the following detailed description and on the figures, on which:
FIG. 1 shows a multilayer band.
FIG. 2 illustrates a vehicle door.
FIG. 3 depicts a vehicle bumper.
FIG. 4 shows a multilayer band, winded as a coil.

### Description of the figures

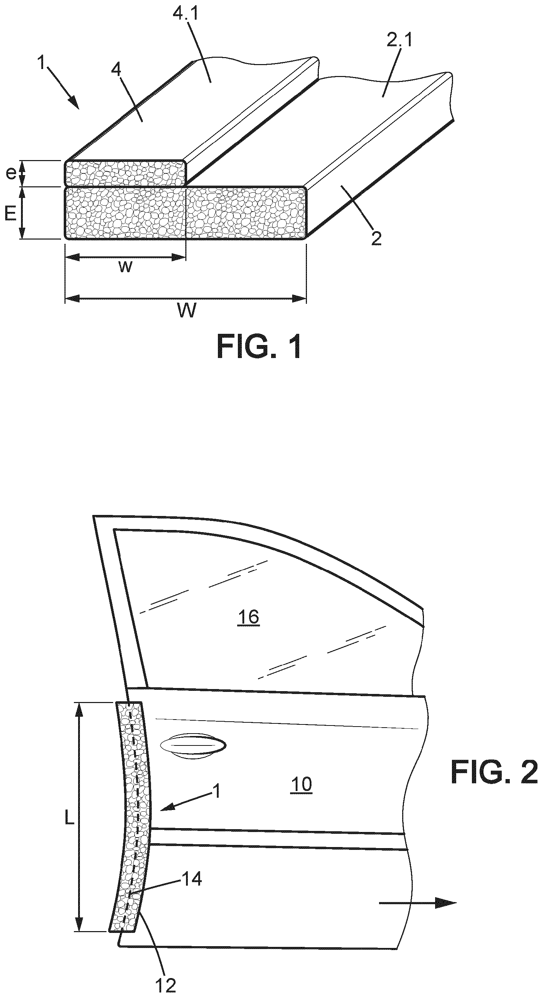

A multilayer band 1 is represented on FIG. 1. The multilayer band 1 is intended to be laid on a painted surface in order to protect it from scratches and/or impacts. The preferred but not limiting application is the car industry, i.e., with the purpose of protecting a car body from the manufacturing plant to the end customer. The multilayer band 1 comprises a protecting layer 2 and an adhesive layer 4. The protecting layer 2 comprises a surface 2.1 and the adhesive layer 4 is directly applied on the surface 2.1 of the protecting layer 2, i.e., there is no intermediate layer between the protecting layer 2 and the adhesive layer. The adhesive layer 4 may be deposited on the protecting layer 2 by a stripe coating process.

The adhesive layer 4 may cover only part of the surface 2.1. In this example, the width w of the adhesive layer 4 is represented to be about half of the width W of the protecting layer. The ratio w/W may be comprised from 10% to 100%. In a variant example, the adhesive layer 4 is deposited on the entirety of the surface 2.1 and part of the adhesive layer is neutralized, i.e. rendered non adhesive.

The width W may be comprised from 10 mm to 50 mm, preferably from 20 mm to 40 mm, more preferably about 30 mm. These dimensions allow to use the multilayer band for most of the applications of the car industry and are a good compromise between using sufficient protection at key locations of the painted product without spoiling material.

The protecting layer 2 is made of a felt of polymer fibers, preferably PET or PP. At least 10%, 20%, or 50% of the fibers may be recycled fibers, e.g., recycled PET. These recycled fibers are objectively recognizable for their distinct properties vs. virgin PET/PP, i.e., opacity, number of impurities, density, among others.

The adhesive layer 4 is made of polyisobutylene, which may be advantageous for its adherence force, its flexibility, and its resistance to moisture. The adhesive layer 4 may have a thickness e of less than 1 mm, preferably less than 100µm, more preferably from 75 to 90µm.

The protecting layer 2 has a thickness E which is of at least 1 mm, so that the painted product is protected from scratches. Also, this thickness enables the adhesive layer to be protected from UV light. The thickness is preferably less than 5 mm. Indeed, a thicker layer would add weight to the band and would be cumbersome to use as a coil. In some preferred examples, the thickness E is comprised from 2.5 to 2.9 mm, as a good trade-off for protecting from scratches and impacts without the drawbacks that have thicker layers.

The felt of polymer material has a basis weight of at least 100 g/m², preferably at least 150 g/m². This enables to protect the adhesive layer from UV light. In a preferred embodiment, the basis weight is of at least 350 g/m² and optionally less than 500 g/m². When the basis weight of fibers is high, the thickness of the felt can be reduced without compromising the resistance to scratches/impacts or the protection of the adhesive against UV light. However, a too dense felt may be too stiff and may not adhere properly to some curved portions of the vehicle.

It is particularly advantageous when the ratio of the thickness over the basis weight is comprised in a given range. Hence, per 100 g/m² of basis weight, the thickness should be comprised between 0.25 and 2 mm.

FIG. 2 shows a possible application for the multilayer band 1 discussed in relation to FIG. 1. A vehicle door 10 comprises a region 12 adjacent to an edge 14. In this example, the arrow points to the front part of the vehicle and the door 10 may be a driver or a passenger door. A window 16 is also partially shown. The door 10 may be entirely or at least partially concave.

A multilayer band 1 is applied to the region 12. The adhesive layer is in direct contact with the region 12. The edge 14 is mostly hidden behind the multilayer band 1. A portion of the multilayer band 1 that is void of adhesive is cantilevered and may overlap the B pillar without adhering thereto.

FIG. 2 also labels the length L of the multilayer band. The length L may be comprised from 20 cm to 300 cm, preferably from 30 cm to 70 cm, more preferably about 60 cm. These dimensions allow to use the multilayer band for most of the applications of the car industry and are a good compromise between using sufficient protection at key locations of the painted product without spoiling material.

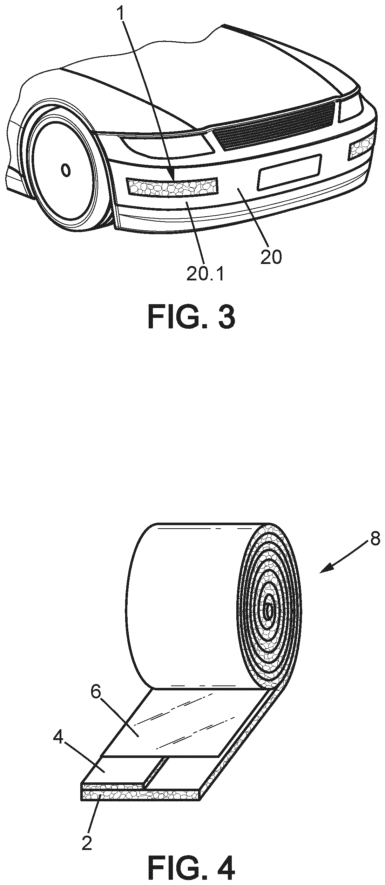

FIG. 3 shows another application, where a multilayer band 1 as discussed above is applied on a corner 20.1 of a bumper 20.

FIG. 4 shows that the multilayer band of the present disclosure can be winded as a coil 8. To that end, a protective film 6 can cover the adhesive layer 4 opposite the protecting layer 2.

A method for protecting a painted product comprises applying a provided multilayer band as discussed above to a painted product, by directly contacting the adhesive layer to the surface of the painted product.

The method may comprise providing the multilayer band as a coil as described in relation to FIG. 4. The coil is therefore unwound and, if necessary, a segment of the multilayer band is cut to a desired length. The protective film 6 is then removed before applying the multilayer band to the painted product.

In relation to FIGS. 2 or 3, the method can comprise applying the multilayer band on a region of a vehicle door adjacent an edge, or on a corner of a bumper.

It is important to note that FIGS. 2 and 3 are merely key examples of the use of the multilayer band and other use can be made of the multilayer band of the present disclosure, for example in civil engineering, naval engineering, aerospace industry or domestic use. Although the disclosure focuses on painted products, the body on which the multilayer band is applied may not be painted.

### Examples

The ability for various felts to protect the adhesive from UV light has been tested. Three samples of felt were tested. Felt 1 is not according to the invention while felt 2 and 3 are according to the invention. An adhesive made from polyisobutylene is coated directly on the felt by a technique considered as equivalent to reverse roll, i.e. coating the felt on a siliconized liner and then laminating the humid adhesive by application of low pressure on the felt.

Each sample of felt is adhered on a surface and then exposed to artificial light in a Q-SUN XE-1 chamber, i.e., a xenon arc chamber which reproduces the damage caused by full-spectrum sunlight. The protocol followed is the standard NF EN ISO 4892-2 (2013), although without addition of moisture. The samples were exposed to a light of the spectrum 300-400 nm at a power of 60 W/m², simulating daylight radiations. The temperature of the black panel was set to 65°C. After 250 hours, 500 hours or 750 hours, a sample of each felt is removed from the surface to assess the presence or not of adhesive residues.

The following table captures the essential results:

**Table 1: UV protection test**

| | Basis weight (g/m²) | Thickness (mm) | Density (kg/m³) | Exposure duration | | |
|---|---|---|---|---|---|---|
| | | | | 250 hours | 500 hours | 750 hours |
| Felt 1 | 116.5 | 2.5 | 46.6 | Adhesive residues on the surface | | |
| Felt 2 | 200 | 1.5 | 133.3 | No adhesive residues on the surface | | |
| Felt 3 | 400 | 2.65 | 150.9 | No adhesive residues on the surface | | |

The experiments show that irrespective of the time of exposure, felt 1 showed residues of adhesive on the surface. Hence felt 1 failed to protect the adhesive from UV light. In contrast, no residues were found when using felt 2 or felt 3. The protection is therefore not sufficient when density is 46.6kg/m³ associated with a thickness of 2.5mm, whilst the protection is sufficient with a density of 133.3kg/m³ associated with a thickness of 1.5mm (felt 2) or with a density of 150.9kg/m³ associated with a thickness of 2.65mm (felt 3). The comparison between felt 1 and felt 2 shows that a thinner felt with higher density (felt 2) is more adapted to protect the adhesive from UV light than a thicker felt with a lower density (felt 1).

### Reference Signs List

1: multilayer band
2: protecting layer - felt of polymer fibers
2.1: surface of the protecting layer 2
4: adhesive layer
4.1: surface of the adhesive layer 4
6: protective film of paper
8: coil
10: vehicle door
12: region of the vehicle door adjacent to an edge 14
14: edge of the vehicle door
16: window of the vehicle
20: vehicle bumper
20.1: corner of the vehicle bumper
E, e: thickness of the protecting layer and adhesive layer
W, w: width of the protecting layer and adhesive layer
L: length of the protecting layer

## Claims

1. A multilayer band (1) for protecting a painted product (10, 20), the multilayer band (1) comprising:
a protecting layer (2) made of a felt comprising polymer fibers, the protecting layer (2) having a density higher than 50 kg/m³; and
an adhesive layer (4) comprising an adhesive covering at least a portion of a surface (2.1) of the protecting layer (2).

2. The multilayer band (1) according to claim 1, wherein the protecting layer (2) has a thickness (E) of at least 1 mm, a basis weight of at least 100 g/m², or a combination thereof.

3. The multilayer band (1) according to claim 1 or 2, wherein the polymer fibers comprise fibers of polyethylene terephthalate (PET), fibers of polypropylene (PP), polybutylene terephthalate (PBT), polylactic acid (PLA), viscose, or a combination thereof.

4. The multilayer band (1) according to any of claims 1 to 3, wherein the polymer fibers comprise at least 5%, preferably at least 10%, more preferably at least 50% of recycled polymer fibers.

5. The multilayer band (1) according to any of claims 1 to 4, wherein the adhesive is a rubber-based adhesive, silicone adhesive, acrylic adhesive, or a mixture thereof, in particular polyisobutylene.

6. The multilayer band (1) according to any of claims 1 to 5, wherein, for a basis weight of the protecting layer (4) being equal to 100 g/m², the thickness of said protecting layer (2) is from 0.25 to 2 mm.

7. The multilayer band (1) according to any of claims 1 to 6, wherein the basis weight of the protecting layer (2) is less than 500 g/m².

8. The multilayer band (1) according to any of claims 1 to 7, wherein the thickness (E) of the protecting layer (2) is less than 5 mm.

9. The multilayer band (1) according to any of claims 1 to 8, wherein the protecting layer (2) has a width (W) that is from 10 mm to 50 mm, preferably from 20 mm to 40 mm, more preferably about 30 mm.

10. The multilayer band (1) according to any of claims 1 to 9, wherein the protecting layer (L) has a length that is comprised from 20 cm to 300 cm, preferably from 30 cm to 70 cm, more preferably about 60 cm.

11. Method for protecting a painted product, the method comprising:
providing a multilayer band (1) according to any of the preceding claims; and
applying the multilayer band on the painted product (10, 20), such that the adhesive layer (4) directly contacts the painted product (10, 20).

12. The method according to claim 11, wherein providing the multilayer band (1) comprises providing the multilayer band as a coil (8), wherein the adhesive layer (4) is covered by a protective film (6), the method further comprising unwinding the coil (8) and removing the protective film (6) before applying the multilayer band (1) on the painted product (10, 20).

13. The method according to claim 11 or 12, wherein the painted product (10, 20) is a vehicle door (10) having an edge (14), and wherein applying the multilayer band (1) on the painted product (10) comprises applying the multilayer band (1) such that the adhesive layer (4) contacts a region (12) of the vehicle door (10) adjacent to the edge (14), wherein a portion of the surface (2.1) of the protecting layer (2) that is void of adhesive layer (4) is free of contact with the vehicle door (10).

14. The method according to claim 11 or 12, wherein the painted product (10, 20) is a vehicle bumper (20).

15. The method according to claim 14, wherein applying the multilayer band (1) on the painted product (20) comprises applying the multilayer band (1) at a corner (20.1) of the bumper (20).
